# DEMANDE DE BREVET EUROPEEN

(11) **EP 3 940 563 A1**
(43) Date de publication de la demande: **19.01.2022**
(21) Numéro de dépôt: 21183793.5
(22) Date de dépôt: 05.07.2021
(51) Int. Cl.: G06F 21/32, G06F 21/36, H04L 9/08, H04L 29/06, H04W 12/06, G06F 21/31

(54) **MÉTHODE POUR LA GÉNÉRATION D'UNE CLEF D AUTHENTIFICATION À PARTIR DE L IMAGE D'UN TATOUAGE ET DISPOSITIF ASSOCIÉ**

(30) Priorité: 12.07.2020 FR 2007374
(71) Demandeur: Tabary, Frédéric, 44300 Nantes (FR)
(72) Inventeur: Tabary, Frédéric, 44300 Nantes (FR)
(74) Mandataire: Pichon, Julien

(57) **Abrégé**

L'invention concerne une méthode de génération d'une clef d'authentification pour l'accès à une mémoire à partir de l'image d'un tatouage sur le corps d'un individu comportant :
▪ acquisition (ACQ₁) d'une image 3D (IM₁) comprenant un tatouage (2) sur le corps d'un individu (1) par au moins un dispositif optique (3) d'un terminal électronique (4);
▪ génération (GEN_K) d'une clef de cryptage (Kc) à partir d'un encodage du tatouage de ladite image 3D (IM₁);
▪ association (AS₁) de la clef de cryptage (Kc) avec une donnée prédéfinie (Id), ladite association définissant une clef d'authentification à deux facteurs (K_{A}) ;
▪ émission (EM₁) de ladite clef d'authentification (K_{A}) à un serveur de gestion de droits d'accès (GEST) ;
▪ association (AS₂) par le serveur de gestion de droits d'accès (GEST) de la clef d'authentification à deux facteurs (K_{A}) à un espace mémoire (M₀) accessible depuis un réseau de données (NET₁).

## Description

### Domaine de l'invention

L'invention concerne une méthode pour la génération d'une clef d'authentification, notamment d'une authentification forte, également appelée « authentification à double facteur » ou « double authentification ». Le domaine de l'invention concerne plus particulièrement les méthodes d'authentification utilisant une donnée associée au corps d'un individu.

### État de la technique

L'authentification est un processus permettant à un système d'assurer la légitimité d'une demande d'accès à un service numérique, telle que l'accès à une donnée. Elle permet, par exemple, de déterminer si une personne qui cherche à accéder à certaines données est bien habilitée à le faire et si elle dispose des autorisations suffisantes.

Les techniques d'authentification pour mettre en oeuvre des systèmes d'authentification suffisamment fiables et incorruptibles sont un enjeu majeur de la garantie d'usage d'un grand nombre d'applications numériques. L'enjeu de cette problématique est tiré par la hausse de la connectivité mondiale ainsi que les applications et les pratiques qui y sont liées, et la dématérialisation par la transition numérique.

Traditionnellement, trois types de facteurs permettent d'authentifier un individu : ce qu'il sait (mot de passe, code pin, question secrète), on parle alors de facteur mémoriel, ce qu'il possède (jeton, carte), on parle alors de facteur matériel, et ce qu'il est (iris, voix, empreinte digitale ou autre donnée biométrique), on parle alors de facteur corporel. L'authentification est alors qualifiée de forte lorsqu'elle a recours à une combinaison d'au moins deux de ces facteurs. Cependant, le facteur mémoriel est de moins en moins utilisé, car il s'agit du facteur le plus facilement piratable. Les méthodes d'authentification forte émergentes reposent ainsi sur la combinaison des deux facteurs matériel et corporel. Ainsi, il s'est développé de nombreux moyens d'authentification forte combinant un facteur matériel et un facteur corporel basé sur une donnée biométrique.

Cependant, malgré la généralisation de la mise en place d'une authentification forte, le nombre d'attaques informatiques ne cesse d'augmenter. La biométrie a récemment montré certaines limites dans la fiabilité avec la reproduction de l'empreinte digitale de la ministre de la défense allemande à partir de photos haute résolution. Il est également possible de « voler » l'iris, de copier la voix d'une personne ou de prélever son ADN à l'insu de son plein gré et sans qu'il puisse s'en rendre compte. Il est donc possible de « voler » ces caractéristiques uniques et propres à chaque humain, fragilisant ainsi le facteur d'authentification associé. Ces données sont facilement accessibles par la multiplication des images publiques des individus, des comptes utilisateurs sur des réseaux sociaux, des caméras capturant des images de chaque citoyen à des fins de surveillance ou encore des documents légaux tels que les passeports.

Un autre inconvénient de l'utilisation de la biométrie dans l'authentification forte concerne le stockage des données biométriques des personnes. Ces données qui relèvent de la vie privée permettent d'identifier un individu indépendamment du système d'authentification, par exemple, on peut retrouver l'identité d'un individu à partir de son empreinte digitale ou de son ADN. Ce risque provoque une réticence à l'utilisation, notamment pour des solutions de stockage anonyme.

Il existe donc un besoin de fournir une méthode d'authentification, notamment une méthode d'authentification forte, basée sur un facteur corporel qui soit difficilement accessible ou reproductible pour une personne tierce mal intentionnée, et qui garantisse l'anonymisation de l'individu à authentifier.

### Résumé de l'invention

Selon un aspect, l'invention concerne une méthode de génération d'une clef d'authentification pour l'accès à une mémoire à partir de l'image d'un tatouage sur le corps d'un individu comportant :
▪ l'acquisition d'au moins une image 3D comprenant un tatouage sur le corps d'un individu par au moins un dispositif optique d'un terminal électronique ;
▪ la génération d'une clef de cryptage à partir d'un encodage de ladite au moins une image 3D du tatouage ;
▪ l'association de la clef de cryptage avec une donnée prédéfinie stockée dans une mémoire dudit terminal électronique, ladite association définissant une clef d'authentification à deux facteurs;
▪ L'association par un serveur de gestion de droits d'accès de la clef d'authentification à deux facteurs à un espace mémoire d'un réseau de données.

Selon un mode de réalisation, l'acquisition comprend une pluralité d'acquisitions d'images 3D du tatouage afin de générer un modèle 3D de cryptage dont chaque point est caractérisé par des données géométriques et des données de couleur.

Selon un mode de réalisation, la génération d'un modèle 3D de cryptage comprend un redimensionnement dudit modèle à une échelle prédéfinie et une association de coordonnées à chacun des points à partir d'un point de référence dudit modèle 3D de cryptage et d'un repère prédéfini.

Selon un mode de réalisation, l'encodage comprend la génération d'un ensemble de points d'ancrage du modèle 3D de cryptage définissant des informations à encoder pour générer une clef de cryptage.

Selon un mode de réalisation, la méthode comprend une pluralité d'acquisitions d'images 3D du tatouage jusqu'à obtenir un nombre minimal de points d'ancrage pour l'encodage dudit tatouage.

Selon un mode de réalisation, la méthode comprend une segmentation du modèle 3D en différentes parties définissant un ensemble de modèles 3D partiels, chaque modèle 3D partiel étant associé à un espace mémoire dédié.

Selon un mode de réalisation, la méthode comprend :
▪ association d'une seconde donnée prédéfinie avec un sous espace mémoire de l'espace mémoire ;
▪ génération d'une donnée d'accès à un tiers audit sous espace mémoire ;
▪ émission de la donnée d'accès audit tiers.

Selon un mode de réalisation, une image 3D acquise comprend une image 2D et une carte de profondeur.

Selon un autre aspect, l'invention concerne une méthode d'accès à une mémoire d'un réseau de données à partir de l'image d'un tatouage d'un corps humain comportant les étapes suivantes :
▪ acquisition d'une image 3D comprenant un tatouage sur le corps d'un humain par une optique d'un terminal électronique ;
▪ génération d'une clef de décryptage à partir d'un encodage du tatouage de ladite image 3D acquise ;
▪ association de la clef de décryptage avec une donnée prédéfinie enregistrée dans une mémoire du terminal électronique ; ladite association définissant une donnée d'authentification à deux facteurs ;
▪ contrôle de la donnée d'authentification par le serveur de gestion de droit d'accès à partir d'une clef d'authentification connue dudit serveur de gestion de droits d'accès ;
▪ génération d'un droit d'accès à un espace mémoire accessible depuis un réseau de données, ladite mémoire étant associée à ladite clef d'authentification.

Selon un mode de réalisation, la clef d'authentification associée à un espace mémoire accessible depuis un réseau de données est générée par la méthode de génération d'une clef de l'invention.

Selon un mode de réalisation, la clef de décryptage est générée au moyen d'un algorithme de reconnaissance du tatouage mis en oeuvre par un réseau de neurones convolutif, ledit réseau de neurones convolutif ayant été entrainé à partir d'un ensemble d'images acquises du tatouage.

Selon un mode de réalisation, la méthode comprend :
▪ génération d'un indicateur de mortalité dudit humain ayant ledit tatouage ;
▪ libération de la clef de cryptage pour accéder à au moins un sous-espace mémoire prédéfini en fonction de la valeur dudit indicateur de mortalité.

Selon un mode de réalisation, la clef de décryptage est associée avec une date, ladite date étant soit un horodatage propre à l'acquisition du tatouage, soit un horodatage de l'émission de ladite clef de décryptage, le contrôle de la donnée d'authentification comprenant un contrôle de l'horodatage de l'acquisition et/ou de l'horodatage de l'émission.

Selon un autre aspect, l'invention concerne un système comprenant :
▪ Un terminal électronique comprenant un dispositif optique et une interface de communication sans fil pour transmettre des données vers un réseau de données ;
▪ un calculateur adapté pour exécuter les étapes de la méthode de l'invention.

Selon un autre aspect, l'invention concerne un produit-programme d'ordinateur téléchargeable depuis un réseau de communication et/ou enregistré sur un support de données lisible par un ordinateur et/ou exécutable par un ordinateur, caractérisé en ce qu'il comprend des instructions de code de programme informatique de mise en oeuvre du procédé de l'invention.

Selon un autre aspect, l'invention concerne un support d'enregistrement de données, lisible par un ordinateur, sur lequel est enregistré un programme d'ordinateur comprenant des instructions de code de programme de mise en oeuvre du procédé de l'invention.

L'invention permet ainsi une authentification à deux facteurs dont un des facteurs peut-être une donnée encodée à partir d'au moins une acquisition d'une image d'un tatouage. Selon une autre possibilité, tout autre moyen permettant d'acquérir des points caractéristiques du tatouage peut être utilisé comme facteurs d'authentification. Un avantage est qu'un tatouage peut être caché dans la vie publique, par exemple sous les vêtements. Un tatouage est donc bien plus difficile à « voler » qu'une empreinte digitale, l'iris ou une voix (accessibles par photographie ou enregistrement de la personne dans un espace public).

Un autre avantage est que dans le cas d'une personne ayant plusieurs tatouages, il est impossible de savoir quel est le tatouage (ou quelle partie d'un tatouage) est utilisé pour la méthode d'authentification. De plus, la combinaison de ce facteur avec un second facteur, représenté par la donnée prédéfinie du terminal électronique, permet de renforcer la sécurité de l'authentification.

Un autre avantage est que le tatouage n'est pas une donnée biologique. En effet, les tatouages surtout lorsqu'ils sont cachés par les vêtements, ne sont pas connus publiquement. L'invention permet ainsi de limiter l'utilisation malveillante d'une donnée propre à l'utilisateur lors de l'utilisation d'une telle méthode.

### Brève description des figures

D'autres caractéristiques et avantages de l'invention ressortiront à la lecture de la description détaillée qui suit, en référence aux figures annexées, qui illustrent :
[Fig. 1] : une vue schématique du système de l'invention dans lequel un terminal électronique acquiert une image d'un tatouage pour accéder à un espace mémoire distant ;
[Fig. 2] : un mode de réalisation d'un procédé de génération d'une clef d'authentification à partir d'un tatouage d'une personne ;
[Fig. 3] : un mode de réalisation d'un procédé d'accès à une mémoire à partir de l'acquisition d'un tatouage ;
[Fig. 4] : un mode de réalisation d'une mise en œuvre du procédé de l'invention permettant d'accéder à une pluralité d'espaces mémoire,
[Fig. 5] : un mode de réalisation d'une segmentation d'un tatouage pour générer une mise en œuvre du procédé de l'invention permettant d'accéder à une pluralité d'espaces mémoire.

Selon un premier aspect, l'invention concerne une méthode de génération d'une clef d'authentification pour l'accès à une mémoire, à partir de l'image d'un tatouage sur le corps d'un individu.

### Acquisition d'une image 3D

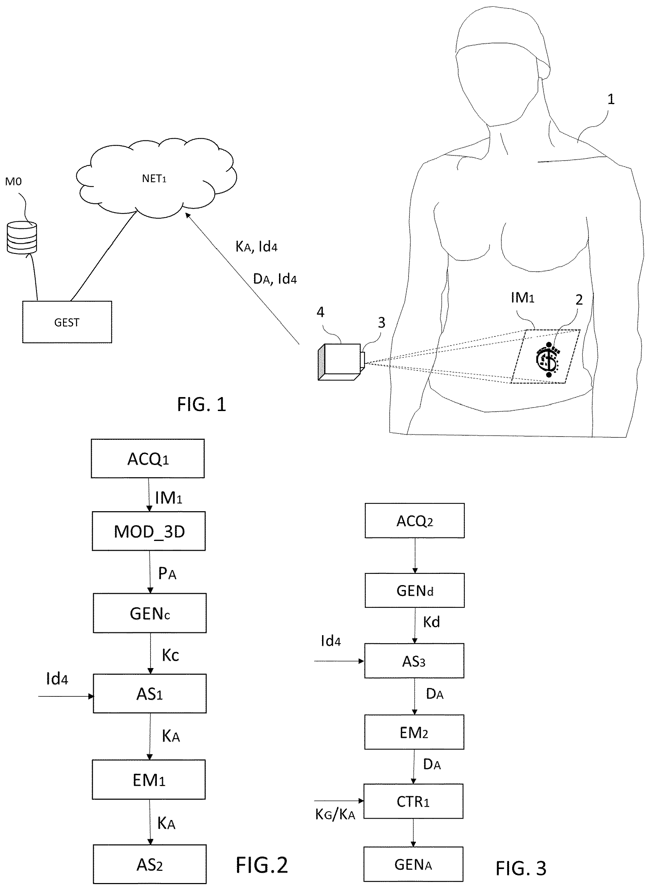

La méthode de génération d'une clef d'authentification K_{A} pour l'accès à une mémoire Mo comprend l'acquisition d'une image tridimensionnelle, appelée « image 3D » dans la suite de la présente description, elle est notée IM₁. Cette étape est notée ACQ₁ sur la figure 2. L'image 3D est acquise par un dispositif optique 3 d'un terminal électronique 4. Le terminal électronique 4 est par exemple un téléphone intelligent, appelé communément « Smartphone », une tablette tactile, une montre connectée ou un équipement électronique connecté. Par « connecté », on entend un dispositif connecté à un réseau de données NET₁, tel qu'internet, grâce à une liaison sans fil.

L'image 3D acquise comprend l'image d'un tatouage sur le corps d'un individu 1. Le tatouage 2 sur le corps de cet individu 1 est alors utilisé pour générer une clef de cryptage Kc formant un facteur d'authentification d'une information d'authentification à deux facteurs.

Le dispositif optique 3 est configuré pour acquérir une image 3D. C'est-à-dire que le dispositif optique 3 comprend par exemple deux optiques dans le champ visible ou dans l'infrarouge.

La figure 1 représente une telle séquence d'acquisition d'une image d'un tatouage sur le corps d'un individu 1 à partir d'un terminal électronique 4 connecté à un réseau de données NET₁.

Dans le cadre de présente invention, une image 3D peut s'entendre comme un ensemble d'images d'un même tatouage 2 sur le corps d'un individu 1, au moins deux images, permettant de générer une information de profondeur dudit tatouage 2. Selon un exemple, l'image 3D peut être une image stéréoscopique, c'est-à-dire une paire d'images, telle que deux vues dites gauche et droite, réalisée par deux capteurs optiques prenant une même scène à partir de deux points de vue légèrement distants. Le spectre d'une telle image peut être dans le visible ou dans l'infrarouge. Dans ce cas, une image 3D peut être une paire d'images couleur ou infrarouges. Selon un autre exemple, une image 3D peut également s'entendre comme une image qui est directement associée à une carte de profondeur, selon un autre exemple, une image 3D peut s'entendre comme un nuage de points représentant un échantillonnage d'une surface tridimensionnelle obtenue à partir d'images acquises d'un sujet, chaque point pouvant comprendre également des données de couleurs. L'image 3D peut également comprendre d'autres informations, en plus des points considérés en tant que coordonnées dans un référentiel galiléen, tels que des informations de couleurs. Selon un mode de réalisation, l'image 3D comprend une image 2D et information de profondeur estimée par un algorithme d'estimation de profondeur. Selon un mode de réalisation, l'image 3D comprend une image 2D et un maillage tridimensionnel calculés selon le procédé de l'invention. Plus généralement, on nomme une image 3D : une image 2D à laquelle est combinée une information numérique permettant de construire une représentation tridimensionnelle d'une surface dans l'espace. Cette information numérique peut être une seconde image, une carte de profondeur ou toute autre donnée calculée permettant construire un nuage de points dans l'espace à partir d'une image 2D.

Selon un mode de réalisation, le dispositif optique 3 comprend une paire de caméras permettant de générer une carte de profondeur de l'image acquise. Selon un exemple de réalisation, les caméras sont des caméras infrarouges. Les caméras infrarouges offrent des résolutions permettant de dresser une carte de profondeur dont la précision permet de restituer des différences de reliefs de la surface du corps comprenant le tatouage 2 de l'individu 1.

Selon une méthode, des images 2D acquises d'un même objet depuis deux points de vue dont on connait l'agencement peuvent être combinées selon des techniques connues pour obtenir une carte dite de profondeur ou de distance.

Selon un exemple de réalisation, le dispositif optique 3 comprend 3 caméras dont une paire de caméras infrarouges et une caméra couleur.

Selon un exemple, le dispositif optique 3 peut comprendre une paire de caméras infrarouges 3D couleur et au moins un projecteur infrarouge.

Selon un autre exemple, le dispositif optique 3 peut comprendre une paire de caméras couleur configurées pour faire de la stéréo passive afin de générer les images 3D. Selon un autre exemple, le dispositif optique 3 peut comprendre une caméra couleur et un projecteur de lumière projetant des motifs de lumière structurée. Les images acquises peuvent alors être traitées de sorte à analyser la déformation du motif projeté. Cette technique permet d'obtenir une donnée supplémentaire et permet d'améliorer la reconstruction 3D. En particulier, la détection d'une déformation d'un motif projeté permet d'améliorer la précision de la carte de disparité entre deux images utilisées pour générer la carte de profondeur. En outre, le projecteur permet de réduire le bruit lors de la construction d'un nuage de points le cas échéant.

Selon des variantes de réalisation, d'autres technologies peuvent être mises en œuvre dans l'invention pour reconstruire une image 3D du tatouage sur le corps de l'individu, par exemple à partir de caméra temps de vol. Dans ce dernier cas, la caméra 3D peut être, par exemple, remplacée par une caméra temps de vol, plus connu sous l'appellation anglo-saxonne « Time-of-Flight », ToF. Dans ce cas, il s'agit d'un rayon laser ou lumineux visible ou infrarouge couplé à une caméra ou un récepteur photosensible permettant de mesurer le temps de vol de différents rayons tirés dans l'espace et donc d'en reconstruire une cartographie 3D.

Selon un mode de réalisation, un algorithme de détection de contours ou de forme peut être utilisé afin d'extraire les caractéristiques propres au tatouage de l'image acquise. Les différences de teintes, les contrastes, les couleurs du tatouage peuvent être pris en considération afin de segmenter une image 3D du tatouage pour en générer une image traitée.

Selon un mode de réalisation, l'utilisateur peut sélectionner à partir d'une interface graphique des zones d'intérêt et écarter des zones sans intérêt pour extraire l'image du tatouage, et au moins son contour.

### Construction d'un modèle 3D

Préférentiellement, la méthode comprend une pluralité d'acquisitions d'images 3D comprenant le tatouage 2. Préférentiellement, chaque acquisition comprend l'acquisition d'une vue 3D dudit tatouage 2 depuis un angle ou une position différente d'une autre acquisition. Chaque vue 3D est générée à partir d'un dispositif optique 3, par conséquent chaque vue présente une image 3D de reconstruction. On nomme cette image 3D reconstruite, un modèle 3D de cryptage. Cette étape est notée MOD_3D sur la figure 2.

La multiplication des points de vue 3D permet de générer un modèle 3D de cryptage issu d'une recombinaison réalisée à partir des différentes vues 3D acquises. Cette recombinaison aboutie à la génération d'un modèle 3D suffisamment précis pour en déterminer des points caractéristiques indépendants de la prise de vue. Les points caractéristiques permettent alors de définir un encodage dudit tatouage 2 pour générer une clef de cryptage Kc. La distribution des points du modèle 3D peut être plus ou moins dense pour définir le modèle 3D de cryptage. Ils peuvent être uniformément répartis selon un échantillonnage donné ou être échantillonnés avec un aléa. Selon un mode de réalisation, la distribution des points du modèle et leur nombre dépendent d'un niveau de chiffrage souhaité.

L'ensemble des points du modèle 3D de cryptage est préférentiellement référencé selon un système de coordonnées dans un repère galiléen. Les positions de l'espace du modèle 3D représentant le tatouage sont recalculées dans un repère qui n'est plus lié à l'individu 1.

L'opération de génération d'un modèle 3D de cryptage peut être réalisée localement par le terminal électronique 4 ou par un serveur distant. Selon un mode de réalisation, les images acquises IM₁ sont émises vers un serveur distant configuré et disposant de moyens de calculs pour générer le modèle 3D de cryptage.

L'opération de combinaison des différentes images 3D de reconstruction peut comprendre la recalibration des images entre elles à partir de la génération d'un nuage de points extraits de chaque image 3D acquise. Les nuages de points peuvent être générés à partir de la carte de profondeur de chaque image 3D acquise. Lorsque les nuages de points des différentes vues 3D acquises sont calibrés entre eux, le modèle 3D de cryptage est généré.

Le modèle 3D de cryptage peut être traité numériquement par un calculateur. En effet, chaque point du modèle 3D de cryptage comprend des coordonnées spatiales (x, y, z) relatives à la position dans l'espace du point selon un référentiel prédéterminé, le référentiel peut être construit par rapport au modèle 3D de cryptage. Chaque point peut être référencé dans le référentiel à partir de trois coordonnées. En outre, chaque point peut comprendre une information de couleur, tel que des coordonnées trichromatiques (r, g, b ou r, g).

Les informations de couleurs peuvent être obtenues à partir des images couleur acquises avec un étalonnage prédéfini du dispositif optique 3. Une étape d'étalonnage des informations de couleurs peut être mise en œuvre afin de ne retenir que des variations de couleurs entre différents points. Cette possibilité permet de s'affranchir des effets de luminosité variables s'appliquant à toute l'image acquise.

Chaque point du modèle 3D peut également comprendre une information géométrique telle qu'une donnée caractérisant un plan tangent ou une normale au plan de la surface du plan tangent. Les points caractéristiques peuvent comprendre des données géométriques relatives au voisinage local d'un point, par exemple pour déterminer des motifs géométriques particuliers.

Dans cette approche, chaque point du modèle 3D de cryptage peut être associé à un vecteur dont chaque composante définit une caractéristique géométrique, de position ou de couleur.

Selon un mode de réalisation, le procédé comprend une étape de formatage à des dimensions prédéfinies du modèle 3D de cryptage pour homogénéiser les traitements des tailles des différents tatouages.

Le modèle 3D de cryptage peut être encodé pour son traitement numérique et pour la génération d'une clef de cryptage à partir de l'encodage dudit modèle 3D de cryptage.

### Génération d'une clef de cryptage

Dans un second temps, le modèle 3D de cryptage est encodé de manière à générer une clef de cryptage Kc. Cette étape est notée GENc sur la figure 2. Elle peut être réalisée localement par le terminal électronique 4 ou alternativement par un serveur distant, tel que le serveur GEST.

Afin d'encoder le modèle 3D de cryptage, une première méthode vise à identifier des points d'ancrage P_{A} du modèle 3D de cryptage. Les points d'ancrage P_{A} peuvent comprendre des données géométriques telles que des positions et des données géométriques de voisinage par exemple pour déterminer des motifs géométriques singuliers. Selon un mode de réalisation, des données de couleur et éventuellement d'autres données d'enrichissement du modèle 3D de cryptage permettent d'encoder la clef de cryptage Kc.

La génération d'une clef de cryptage Kc peut comprendre une étape d'identification d'un nombre prédéfini de points d'ancrage P_{A}, lesdits points d'ancrage P_{A} vérifiant un certain nombre de conditions géométriques, telles que des conditions d'angles, de valeurs de dérivées de fonction appliquée localement au modèle 3D, à des maximums locaux, etc.

Un avantage est de générer une clef de cryptage Kc à partir de points singuliers de la forme géométrique du tatouage 2 de manière à augmenter la probabilité de reproductibilité de son décodage ultérieur.

Selon un mode de réalisation, les points d'ancrage P_{A} peuvent être sélectionnés parmi les points du modèle 3D à partir d'un algorithme. L'algorithme peut, par exemple, comprendre la génération d'un aléa pour sélectionner les points d'ancrage afin de renforcer la sécurité de la clef de cryptage Kc.

Selon un autre mode d'exécution, les points d'ancrage P_{A} peuvent correspondre à des points remarquables par leurs coordonnées trichromatiques, ou par une autre information contenue dans chaque point du modèle 3D de cryptage. L'ensemble de points d'ancrage P_{A} définit des informations à encoder pour générer la clef de cryptage Kc. La clef de cryptage Kc peut être générée à partir des informations encodées de l'ensemble des points d'ancrage P_{A}.

Selon un exemple, la clef de cryptage Kc peut être générée à partir des informations de profondeur des points ou d'une sélection de points de du modèle 3D de cryptage. Selon un mode de réalisation, la génération de la clef de cryptage Kc comprend la prise en compte d'une carte de profondeur des contours dudit tatouage 2. Un avantage est que les contours du tatouage 2 peuvent permettre d'identifier des « patterns linéaires » dudit tatouage 2. La génération de la clef de cryptage Kc peut comprendre un calcul d'un indicateur comprenant les propriétés des points formant le contour du tatouage 2. Un avantage est donc de générer une clef de cryptage Kc à partir de la forme du tatouage 2. Par exemple, des bavures ou des imprécisions dans le contour du tatouage 2 peuvent être utilisées pour définir des propriétés numériques singulières et générer une clef de chiffrage Kc robuste.

La clef de cryptage Kc peut également être générée à partir de la distribution des coordonnées trichromatiques des points ou d'une sélection de points du nuage de points correspondant au tatouage 2. Un avantage est de générer une clef de cryptage à partir des couleurs du tatouage 2.

La clef de cryptage Kc peut également être générée à partir de toute l'information comprise dans les points du nuage de points du modèle 3D de cryptage. Dans ce mode de réalisation, l'intégralité du nuage de points est utilisée pour définir la clef de cryptage Kc. Un avantage est de tirer profit de l'ensemble de l'information disponible afin de définir une clef de cryptage robuste et complexe. Une clef de cryptage Kc peut comprendre les données de chaque point du modèle 3D de cryptage par une opération de sérialisation des points et des données caractérisant lesdits points. On rappelle que la sérialisation est le processus de conversion d'un objet en un flux d'octets pour stocker l'objet ou le transmettre à une mémoire, à une base de données, ou dans un fichier. Un objectif est d'enregistrer l'état d'un objet afin de pouvoir le recréer si nécessaire. Une étape de chiffrage des octets sérialisés peut être définie afin de stocker une clef chiffrée.

Selon un exemple, le modèle 3D est échantillonné avec un pas d'échantillonnage constant et prédéfini dans la mise en œuvre de l'algorithme d'encodage du modèle 3D de cryptage. Cet échantillonnage permet d'homogénéiser les traitements postérieurs lors d'une vérification qu'une clef de décryptage correspond bien au bon modèle 3D de cryptage.

### Association des facteurs d'authentification

Une fois la clef de cryptage Kc générée, cette dernière est associée avec une donnée prédéfinie Id₄ stockée dans une mémoire du terminal électronique 4. Cette étape est notée AS₁ sur la figure 2. La donnée prédéfinie Id₄ est préférentiellement un second facteur d'authentification. Préférentiellement, la donnée prédéfinie Id₄ est un facteur d'authentification matériel. Selon les différents modes de réalisation, cette association peut être réalisée par le terminal électronique 4 ou bien par le serveur GEST.

La donnée prédéfinie Id₄ peut être un code stocké dans le terminal électronique 4. La donnée prédéfinie peut être un numéro d'authentification, une adresse IP, une adresse Mac, ou toute autre donnée comprenant un numéro d'identification du terminal électronique 4. La donnée prédéfinie Id₄ peut comprendre un identifiant du terminal électronique 4 ayant acquis l'image 3D ou un identifiant d'un autre terminal électronique qui a été appairé avec le terminal électronique 4. Il peut s'agir, par exemple, d'un identifiant d'un badge, un identifiant d'une étiquette radio, d'un identifiant d'une puce électronique, d'un identifiant d'une montre connectée ou d'un identifiant de tout autre équipement électronique capable d'établir un lien de communication avec le terminal électronique 4.

Selon un mode de réalisation, un utilisateur 1 peut configurer différents équipements électroniques 4 ayant l'accès à l'espace mémoire M₀ en précisant différentes données prédéfinies Id₄ lors de la construction de la clef d'authentification K_{A}. Dans ce dernier cas, différentes clefs d'authentification K_{A} peuvent être générées et enregistrées sur le serveur de gestion de droits d'accès GEST. Selon un exemple, à chaque acquisition, le terminal électronique 4 peut être configuré pour générer une interface pour choisir si une nouvelle clef d'authentification K_{A} doit être définie.

La donnée prédéfinie Id₄ permet avantageusement d'ajouter une seconde sécurité qui, combinée à la clef de cryptage Kc, renforce la sécurité de l'authentification. L'authentification peut alors être considérée comme une authentification forte, car elle combine deux facteurs : un premier facteur matériel, c'est-à-dire la donnée prédéfinie Id₄, et un second facteur corporel, c'est-à-dire la clef de cryptage Kc, générée à partir de l'encodage de l'image 3D du tatouage sur le corps de l'individu.

Dans un mode de réalisation, la donnée prédéfinie Id₄ peut être un autre facteur d'authentification tel qu'un facteur mémoriel, par exemple un mot de passe ou un facteur réactionnel.

Dans un mode d'exécution, la clef de cryptage Kc et la donnée prédéfinie Id₄ peuvent être associées à un troisième facteur pour définir une clef d'authentification K_{A} forte à trois facteurs. Par authentification à deux facteurs, on entend une authentification à un minimum de deux facteurs. Il paraitra évident que l'invention peut être mise en œuvre avec une clef d'authentification K_{A} comprenant une pluralité de facteurs d'authentification.

La clef d'authentification K_{A} peut être utilisée pour définir un accès à un espace mémoire d'un réseau de données.

### Emission d'une donnée d'authentification

La clef d'authentification K_{A} peut être directement générée par le serveur de gestion de droits d'accès GEST. Alternativement, la clef d'authentification K_{A} est émise du terminal 4 vers un serveur de gestion de droit d'accès GEST lorsque c'est le terminal électronique 4 qui génère cette clef K_{A}. La clef d'authentification K_{A} peut être transmise au serveur de gestion de droit d'accès GEST par le terminal électronique 4 à travers un réseau de données NET₁. L'étape d'émission est notée EM₁ à la figure 2.

Le serveur de gestion de droit d'accès GEST est configuré pour être accessible depuis un terminal connecté 4 au réseau de données NET₁. Le serveur de gestion de droit d'accès GEST peut être connecté au terminal électronique T₁ par connexion de type GPRS, 3G, 4G, 5G , Wifi ou tout autre protocole de transfert de données. La clef d'authentification peut être émise par un message de données au travers du réseau de données NET₁. Selon un autre mode de réalisation, les deux facteurs sont émis par des liens de différentes natures ou par différents protocoles. Selon un mode de réalisation, ils sont envoyés de manière asynchrone.

Selon un autre mode de réalisation, les deux facteurs sont envoyés à deux serveurs de gestion d'accès différents dont l'un est susceptible d'envoyer à l'autre une information confirmant les données d'authentification reçues.

Dans un mode de réalisation, la clef d'authentification K_{A} est enregistrée, de préférence sur un espace mémoire du serveur de gestion de droits d'accès GEST. Selon un mode de réalisation, l'enregistrement de la clef d'authentification K_{A} peut comprendre l'enregistrement de la clef de cryptage Kc et l'enregistrement de la première donnée prédéfinie Id₄. Selon un autre mode de réalisation, une partie seulement de la clef d'authentification K_{A} est enregistrée pour former une clef publique.

Selon un mode de réalisation, un ensemble de données sont associés à la clef d'authentification K_{A}, tel qu'un identifiant utilisateur, une adresse mail, un profil utilisateur, un numéro de téléphone, etc. ces données permettent de sécuriser l'accès à la clef d'authentification K_{A}.

Selon un mode de réalisation, la clef d'authentification K_{A} est chiffrée lors de son émission à un serveur de gestion de droits d'accès distant GEST.

Selon une alternative préférée, le modèle 3D de cryptage est envoyé au serveur de gestion de droits d'accès GEST afin qu'il réalise lui-même l'opération de génération d'une clef d'authentification K_{A}. Cette solution implique que la donnée prédéfinie Id4 propre au terminal 4 est envoyée seule ou avec le modèle 3D de cryptage au serveur GEST. C'est ensuite dans un second temps que la clef de cryptage Kc est générée par le serveur GEST. Cette solution a l'avantage de ne pas émettre la clef d'authentification K_{A} au travers le réseau de données NET₁. Seul le serveur GEST est en mesure de connaitre la clef de cryptage puisqu'elle est générée par ses moyens de calculs. Par conséquent, la clef d'authentification K_{A} qui est générée à partir de cette dernière n'est connue que par le serveur de gestion de droits d'accès GEST.

### Association d'un espace mémoire

Le serveur de gestion des droits d'accès GEST comprend une fonction permettant de réaliser une association entre la clef d'authentification K_{A} à deux facteurs et un espace mémoire Mo accessible depuis le réseau de données NET₁. Cette étape est notée AS₂ sur la figure 2.

Le serveur de gestion de droit d'accès GEST est configuré pour permettre d'assurer la légitimité d'une demande d'accès faite par un utilisateur 1 à un espace mémoire associé avec la clef d'authentification K_{A}.

L'association d'un espace mémoire Mo à la clef d'authentification K_{A} à deux facteurs permet par la suite de contraindre l'accès audit espace mémoire M₀ à la présentation d'une clef de décryptage K_{d} qui puisse être validée au moyen de la clef d'authentification K_{A} à deux facteurs.

Selon un mode d'exécution, lors de la réception d'une clef d'authentification K_{A}, le serveur de gestion de droit d'accès GEST sélectionne un espace mémoire M₀ parmi une pluralité d'espaces mémoire d'un réseau préexistants et dont l'adressage peut être configuré et programmé. A cette fin, le serveur de gestion de droit d'accès GEST sélectionne un espace mémoire Mo libre pour l'associer à la clef d'authentification à deux facteurs K_{A}.

La clef d'authentification K_{A} à deux facteurs peut être associée à un espace mémoire M₀ par la définition d'un couple de valeurs comportant une donnée d'identification D_{I} construite à partir de la clef d'authentification K_{A} et une adresse mémoire de la mémoire M₀. L'adresse mémoire peut être une URL, un port, un lien http ou FTP ou tout autre système d'adressage permettant d'accéder à un espace mémoire à distance. Un intérêt de générer une donnée d'identification D_{I} est de ne pas stocker en clair la clef d'identification K_{A}. La donnée d'identification D_{I} peut comprendre des données produites par une opération réalisée sur la clef d'authentification K_{A} tel qu'un algorithme de compression de données, un algorithme de hachage ou toute autre fonction cryptographique permettant de conserver une information permettant de réaliser une authentification ultérieure lors de l'accès de l'individu à la mémoire M₀ et permettant de conserver un secret de la clef d'authentification K_{A}.

Selon un mode de réalisation, la donnée d'identification D_{I} peut être émise vers le terminal électronique afin d'effectuer une authentification localement sur le terminal électronique 4. Dans ce dernier cas, la donnée d'identification D_{I} peut être temporaire. Il peut s'agir d'un certificat qui doit être renouvelé régulièrement par l'utilisateur 1 en retéléchargeant une nouvelle donnée d'identification D_{I} générée à nouveau à partir de la clef d'authentification K_{A}. Une donnée de date peut être utilisée afin de générer une donnée d'identification D_{I}.

### Segmentation de l'image 3D acquise

Selon un mode de réalisation, la méthode de l'invention comprend, à partir du modèle 3D de cryptage, une étape visant une segmentation de l'image du tatouage 2 en un ensemble de modèles 3D partiels du tatouage 2. Un intérêt est de définir différents accès à différents espaces mémoire M₁, M₂, M₃ à partir d'un seul tatouage 2.

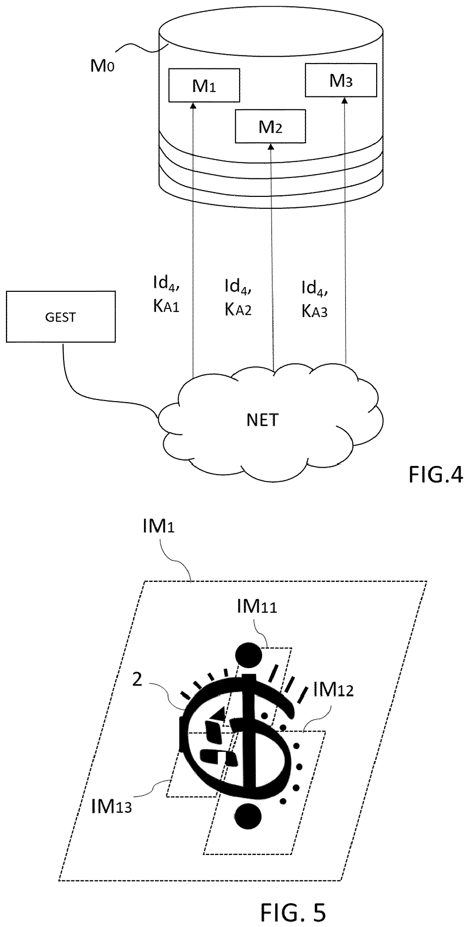

La figure 4 représente un accès à différents sous-espaces mémoires M₁, M₂, M₃ d'une mémoire à partir du décodage de différentes parties du tatouage.

Cette fonction permet de générer une pluralité de clefs de cryptage Kci qui sont, chacune associée à un sous-modèle 3D de cryptage du modèle 3D de cryptage généré à partir des images acquises.

Chaque clef de cryptage Kci peut être associée à une donnée prédéfinie pour définir une clef d'authentification K_{Ai} à deux facteurs pour chaque image 3D partielle du tatouage 2.

Chaque clef d'authentification K_{Ai} est émise au serveur de gestion des droits d'accès GEST et est associée à un espace mémoire différent M₁, M₂, M₃. Selon un mode de réalisation de l'invention, l'espace mémoire Mo est défini par un ensemble de sous-espaces mémoires et chaque clef d'authentification K_{Ai} à deux facteurs est associée à un sous-espace mémoire différent M₁, M₂, M₃.

Selon un mode d'exécution, les modèles 3D partiels sont définis à partir de l'image 3D acquise du tatouage 2 par l'intermédiaire d'une interface utilisateur. L'interface peut offrir un outil de sélection interactif permettant de prendre en considération qu'une partie du tatouage 2. Selon un mode de réalisation, l'interface utilisateur représente une reproduction du tatouage 2 à partir du modèle 3D afin que l'utilisateur 1 puisse effectuer des opérations sur ledit modèle 3D. Parmi les opérations, on trouve par exemple, un zoom, un changement d'orientation, une rotation, un déplacement, une sélection d'une partie dudit modèle 3D.

La figure 5 représente un exemple de segmentation d'un tatouage 2 définissant 3 images partielles ou 3 vues partielles IM₁₁, IM₁₂, IM₁₃ dudit tatouage 2. Préférentiellement les images segmentées sont des images 3D.

Selon un mode de réalisation, la sélection du mode segmentation du tatouage 2 par l'intermédiaire de l'interface utilisateur permet de générer une présélection automatique effectuée par défaut par le terminal électronique 4. Un calculateur peut regrouper des points d'un même voisinage et intégrer un minimum de points du modèle 3D afin permettre une génération d'une clef de cryptage Kci suffisamment forte, c'est-à-dire offrant un niveau de sécurité suffisant.

L'opération de segmentation du modèle 3D peut être réalisée entièrement au sein du terminal électronique 4. Alternativement, lorsque le modèle 3D est généré sur un serveur distant, l'opération peut être réalisée par un serveur grâce une liaison de données avec le terminal électronique 4.

Un avantage est la génération d'une pluralité d'authentifications fortes pour l'accès à une pluralité d'espaces mémoire accessibles depuis le réseau de données à partir d'une seule image 3D d'un tatouage.

Selon un mode d'exécution, chaque clef de cryptage Kc est associée à une unique donnée prédéfinie Idₖ, telle que l'adresse Mac ou l'adresse IP du terminal électronique 4. Selon un mode alternatif, chaque clef de cryptage Kc est associée à différentes données Idₖ telles que la donnée prédéfinie Id₄ prédéfinies qui peuvent être, par exemple, générées par le terminal électronique 4. Selon une alternative, l'utilisateur 1 peut générer autant de données prédéfinies Id₄ que nécessaire. Ce mode alternatif autorise avantageusement, par exemple, de gérer le droit d'accès d'un individu tiers à un sous-espace mémoire m₀ accessible depuis le réseau de données NET₁.

Selon un second aspect, l'invention concerne une méthode d'accès à une mémoire à partir du décodage d'une image d'un tatouage sur le corps d'un individu.

### Accès à la mémoire

Selon ce deuxième aspect, l'invention concerne une méthode d'accès à une mémoire M₀ accessible depuis un réseau de données NET₁. Cette méthode est décrite ci-dessous en référence à la figure 3. Cette méthode permet l'accès à une mémoire Mo distante qui a été préalablement associée à une clef d'authentification K_{A} à deux facteurs dans la méthode selon le premier aspect de l'invention.

Cette méthode comprend l'acquisition ACQ₂ d'une image 3D comprenant l'image d'un tatouage 2. Cette étape d'acquisition ACQ₂ d'une image 3D peut être similaire à l'étape d'acquisition de l'image 3D selon le premier aspect de l'invention. Toutefois, le nombre d'acquisitions peut être réduit. En effet, le nombre d'acquisitions nécessaire pour réaliser une clef de cryptage fiable peut nécessiter une pluralité d'acquisitions.

Dans le cas d'une acquisition d'une image pour accéder à un espace mémoire M₀, une simplicité d'utilisation est recherchée. Dans cet objectif, une unique acquisition du tatouage 2, même partielle peut permettre d'accéder à l'espace mémoire Mo. Cette configuration peut être obtenue à partir du moment où un pourcentage de correspondance entre le modèle 3D de cryptage et le modèle 3D de décryptage est obtenu.

Selon un autre mode de réalisation, une pluralité d'acquisitions d'images 3D est réalisée jusqu'à ce qu'un modèle 3D soit généré.

### Génération d'une clef de décryptage

Le modèle 3D de décryptage généré à partir de l'image 3D comprenant l'image d'un tatouage 2 est ensuite possiblement encodé pour générer une clef de décryptage K_{d}. Cette étape est notée GEN_{d} sur la figure 3. Cette clef de décryptage K_{d} peut être calculée directement sur le terminal électronique 4. Dans une alternative de réalisation, la clef de décryptage K_{d} est calculée sur un serveur distant à partir des images 3D acquises et émises ou à partir d'un modèle 3D de décryptage généré à partir des images 3D acquises et émises.

Selon un mode de réalisation, il existe une fonction bijective entre le modèle 3D est la clef de décryptage générée de sorte à permettre de réaliser des comparaisons entre différents modèles 3D. Dans ce cas, il est alors possible d'effectuer une comparaison entre le modèle 3D de cryptage et le modèle 3D de décryptage.

La génération d'une clef de décryptage K_{d} peut être similaire à l'étape de génération d'une clef de cryptage Kc selon le premier aspect de l'invention. En effet, la clef de décryptage Kd générée peut être de même nature que la clef de cryptage Kc dans la mesure où elles comprennent par exemple le même format, et qu'elles ont été générées par un même algorithme.

Selon une autre alternative, la clef de décryptage K_{d} ne comprend qu'une partie de l'information de la clef de cryptage Kc. Cette réalisation permet de limiter la circulation de la clef de cryptage à travers le réseau.

### Identification à deux facteurs

La clef de décryptage Kd est associée à la donnée prédéfinie Id₄ propre au terminal électronique 4 ou à l'utilisateur, par exemple son email ou un identifiant. Cette étape est notée AS₃ sur la figure 3. La donnée prédéfinie Id₁ est préférentiellement un second facteur d'authentification. La seconde donnée prédéfinie Id₄ est préférentiellement identique à la première donnée prédéfinie. Selon un mode de réalisation, la donnée prédéfinie Id₄ ayant servi pour définir la clef d'authentification K_{A} est plus complexe que la donnée prédéfinie permettant d'accéder à la mémoire distante M₀. A minima, la donnée prédéfinie Id₄ ayant servi pour définir la clef d'authentification K_{A} comprend la donnée prédéfinie permettant d'accéder à la mémoire distante Mo. Lorsque ces données prédéfinies ne sont pas identiques, on parle de seconde donnée prédéfinie pour le service d'accès à une mémoire.

En conséquence, la seconde donnée prédéfinie est préférentiellement de nature à pouvoir être comparée avec la première donnée prédéfinie Id₄ selon le premier aspect de l'invention.

L'association AS₃ de la clef de décryptage K_{d} avec la donnée prédéfinie Id₄ définit une donnée d'authentification D_{A} à deux facteurs. Dans un mode d'exécution, la clef de décryptage K_{d} et la donnée prédéfinie Id₄ peuvent être associées à un troisième facteur pour définir une donnée d'authentification D_{A} forte à trois facteurs.

Selon un exemple, lors de la demande d'accès à un espace mémoire M₀ par un utilisateur auprès du serveur GEST, un message peut être automatiquement envoyé sur le terminal de l'utilisateur afin qu'il valide son accès par exemple en réémettant un code reçu ou en validant une commande ayant pour conséquence d'émettre un message au serveur GEST.

Selon un mode de réalisation, la donnée d'authentification D_{A} est émise vers un serveur de gestion de droit d'accès GEST. Alternativement, la donnée d'authentification est directement calculée au sein du serveur de gestion de droits d'accès GEST. L'étape d'émission de la donnée vers le serveur GEST est notée EM₂ sur la figure 3.

Le serveur de gestion de droit d'accès GEST est connecté à un réseau de données NET₁ lui permettant d'administrer les droits d'accès à au moins un espace mémoire M₀. Le serveur de gestion de droit d'accès GEST comprend des clefs d'authentification K_{A} qui sont chacune associées à des espaces mémoire du réseau NET1 d'une pluralité d'utilisateurs. Le serveur de droit d'accès GEST est configuré pour recevoir une donnée d'authentification, contrôler cette donnée d'authentification à partir d'une clef d'authentification, et générer un droit d'accès à au moins un espace mémoire M₀ du réseau associé à ladite clef d'authentification.

Le serveur de gestion de droit d'accès GEST permet de s'assurer de la légitimité d'une demande d'accès faite par une entité et l'autorisation de cette entité à des ressources du réseau conformément au paramétrage du contrôle d'accès.

### Contrôle et droit d'accès à la mémoire

Une fois émise à un serveur de gestion de droit d'accès GEST ou calculée par ce dernier à partir des deux facteurs reçus, la donnée d'authentification D_{A} est contrôlée. Cette étape est notée CTR₁ sur la figure 3. La donnée d'authentification D_{A} est contrôlée à partir d'une clef d'authentification K_{A} préenregistrée.

Le contrôle CTR₁ peut être réalisé de différentes manières. Une première méthode consiste à analyser la donnée d'authentification D_{A} au regard de la clef d'authentification K_{A}. Une autre méthode consiste à vérifier un certain nombre de points du modèle 3D de cryptage qui correspondent avec un certain nombre de points du modèle 3D de décryptage.

Le contrôle CTR₁ de la clef de décryptage Kd peut comprendre une étape de comparaison avec la clef de cryptage Kc. L'étape de comparaison peut comprendre une opération de calcul fonction d'un écart et/ou d'un rapport entre la clef de cryptage Kc préenregistrée et la clef de cryptage Kc transmise. Cette étape permet avantageusement de s'assurer que le tatouage de l'image 3D utilisé pour la demande d'accès à un espace mémoire M₀ du réseau est bien le tatouage de l'image 3D ayant permis la génération de la clef de cryptage Kc.

Le contrôle CTR₁ de la clef de décryptage Kd peut être validé lorsque la comparaison entre la clef de décryptage Kd et la clef de cryptage Kc permet de générer un indicateur de vraisemblance et de comparer cet indicateur à une valeur seuil prédéfinie.

L'avantage est que l'image 3D sur un corps peut être altérée en fonction du temps du fait de l'évolution du tatouage (étalement de l'encre, estompage des couleurs, etc.) ou du fait de l'évolution du corps de l'individu (changement morphologique de l'individu, cicatrice, brûlure, etc.). Le contrôle de la clef de décryptage autorise ainsi une tolérance d'un écart entre la clef de cryptage préenregistrée et la clef de décryptage pour valider le contrôle.

Selon un mode d'exécution, une fois le contrôle de la clef de décryptage K_{d} effectué, la méthode peut comprendre une étape de génération d'une nouvelle clef de cryptage Kc'. La nouvelle clef de cryptage Kc' peut être générée à partir de la clef de cryptage Kc préenregistrée et la comparaison entre la clef de cryptage Kc préenregistrée et la clef de décryptage Kd.

Un avantage est de générer une nouvelle clef de cryptage Kc', proche de la clef de cryptage préenregistrée Kc, prenant en compte l'écart observé entre la clef de cryptage Kc et la clef de décryptage Kd.

Un intérêt est de faire évoluer dynamiquement la clef de cryptage au fur et à mesure que le corps évolue, c'est-à-dire tout au long du vieillissement d'une personne.

Cette génération permet ainsi de générer une clef de cryptage Kc qui suive les altérations du tatouage dont l'image 3D est acquise pour l'authentification. Par exemple, en cas de l'observation d'estompage minime d'une couleur du tatouage, une nouvelle clef de cryptage Kc est générée pour prendre en compte cet estompage, de même dans le cas de l'apparition d'un grain de beauté sur le tatouage ou d'une cicatrice.

Lors de la demande d'authentification suivante, la clef de cryptage Kc préenregistrée sera la nouvelle clef de cryptage Kc' dont les altérations du tatouage ont été pris en compte. Selon un mode de réalisation, le changement de clef de cryptage est réalisé après une détection successive d'un écart entre la clef de décryptage et la clef de cryptage ou d'une statistique d'écart entre les deux clefs se confirmant avec le temps. L'invention s'applique également avec une comparaison de tout ou partie des modèles 3D de cryptage et de décryptage.

Lorsque le contrôle des deux facteurs d'authentification (la donnée prédéfinie et la clef de cryptage) est validé, le serveur de droit d'accès GEST génère l'accès à un espace mémoire M₀ accessible depuis le réseau de données.

Selon un mode de réalisation, un algorithme de reconnaissance du tatouage mis en œuvre par un réseau de neurones convolutif, ledit réseau de neurones convolutif ayant été entrainé à partir de l'ensemble des acquisitions réalisées par l'individu avec son tatouage. Ainsi, cette solution permet d'entrainer le réseau de neurones avec une pluralité de vues partielles du tatouage et permet de réaliser un contrôle d'accès avec un modèle 3D partiel du tatouage.

### Accès aux sous-espace mémoire

Selon un mode d'exécution, l'acquisition de l'image 3D peut comprendre le rognage du tatouage de l'image 3D. Le rognage du tatouage de l'image 3D permet avantageusement de générer une clef de décryptage pour l'accès à un sous-espace de la mémoire M₀ d'un réseau tel que décrit précédemment.

Selon un mode de réalisation, lors d'une acquisition d'au moins une image 3D, après décodage de la donnée d'authentification, une interface utilisateur du terminal électronique 4 permet de générer une fonction de sélection de l'accès à l'espace mémoire souhaité.

### Horodatage

Selon un mode d'exécution, l'acquisition de l'image 3D est horodatée.

L'horodatage de l'acquisition de l'image 3D permet de comparer cet horodatage à l'horodatage de l'émission de la donnée d'authentification D_{A}. L'étape de contrôle de la donnée d'authentification D_{A} peut comprendre alors le contrôle de l'horodatage de l'acquisition de l'image 3D, par exemple en la comparant avec l'horodatage de l'émission de la donnée d'authentification D_{A} ou l'horodatage de la réception de la donnée d'authentification par le serveur de droits d'accès GEST.

Un avantage est de vérifier que l'image 3D vient d'être acquise et que l'utilisateur n'utilise pas une image ancienne du tatouage. Un intérêt est de vérifier ainsi la proximité entre le terminal électronique 4 et l'individu dont l'image du tatouage 2 est utilisée pour la demande d'authentification. Il est ainsi plus difficile de pirater ce système d'authentification, car la demande d'authentification devrait être réalisée dans un court délai avec la prise de vue du tatouage 2.

### Indicateur de mortalité

Selon un mode d'exécution, l'encodage de l'image 3D du tatouage comprend la génération d'un indicateur de mortalité. L'indicateur de mortalité permet avantageusement de déterminer si l'individu dont l'image du tatouage 2 a été acquise est encore vivant.

L'indicateur de mortalité peut être généré en fonction de la colorimétrie de la peau sur l'image 3D. Selon un autre mode de réalisation, l'indicateur de mortalité peut être généré à partir de données obtenues par une donnée infrarouge d'une image acquise. Selon un exemple de réalisation, un capteur infrarouge collecte des données acquises de l'image IR et les encode dans l'image 3D.

L'indicateur de mortalité peut être généré à partir de la mise en œuvre d'un réseau de neurones convolutif. Le réseau de neurones convolutif est, par exemple, entrainé à partir d'une pluralité d'image 3D de tatouages d'individus vivants et décédés.

L'indicateur de mortalité peut ainsi être généré par régression en fournissant à un tel réseau de neurones l'image 3D acquise.

Selon un mode d'exécution, la donnée d'authentification D_{A} comprend l'indicateur de mortalité. Le contrôle de la donnée d'authentification D_{A} par le serveur de gestion de droits d'accès comprend dans ce mode le contrôle de l'indicateur de mortalité.

En fonction de la valeur de l'indicateur de mortalité, le contrôle de la donnée d'authentification D_{A} peut générer un droit d'accès à l'espace mémoire Mo ou un autre espace mémoire mo' à partir du contrôle de la clef de décryptage K_{d}. Un avantage est de pouvoir accéder à l'espace mémoire uniquement à partir de la clef de décryptage si l'indicateur de mortalité révèle que l'individu est décédé. Ceci permet de se passer de la double authentification par le facteur matériel en cas de décès de l'individu. Les proches de l'individu ou la police peuvent alors accéder à l'espace mémoire avec seulement le facteur corporel.

Selon un autre mode d'exécution, en fonction de la valeur de l'indicateur de mortalité, le contrôle de la donnée prédéfinie ID₄ n'est plus réalisé en fonction de la donnée prédéfinie préenregistrée, mais à partir d'une donnée de secours prédéfinie et préenregistrée. Un avantage est de pouvoir élargir le facteur matériel si l'indicateur de mortalité révèle que l'individu est décédé, par exemple, en autorisant l'accès à un groupe plus élargi, par exemple des proches de l'individu et/ou la police.

### Système

Selon un troisième aspect, l'invention concerne un système pour la mise en œuvre de la méthode selon le premier et/ou selon le second aspect de l'invention.

Le système comprend un terminal électronique 4 comprenant un dispositif optique 3 pour la prise d'image 3D tel que décrit dans la présente description.

Le système comprend des moyens de communication pour l'émission d'information à un serveur de gestion de droits d'accès GEST.

Le système comprend des moyens de communication pour la connexion à un espace mémoire M0 accessible depuis un réseau de données NET₁.

Le système peut comprendre un calculateur ou une unité de calcul pour l'encodage de l'image 3D acquise et pour la génération de la clef de décryptage et/ou de la clef de cryptage. Ces moyens de calculs peuvent être ceux du terminal 4 ou ceux du serveur GEST.

Le système peut comprendre un calculateur adapté pour exécuter les étapes de la méthode selon le premier aspect et/ou selon le deuxième aspect de l'invention.

L'invention concerne également un produit-programme d'ordinateur qui comprend des instructions qui conduisent le système selon l'invention à exécuter les étapes de la méthode selon le premier aspect et/ou selon le deuxième aspect de l'invention. L'invention concerne également un support lisible, préférentiellement un support lisible non-transitoire, comprend un tel programme d'ordinateur.

## Revendications

1. Procédé de génération d'une clef d'authentification pour l'accès à une mémoire (M₀) à partir de l'image d'un tatouage sur le corps d'un individu comportant :
▪ l'acquisition (ACQ₁) d'au moins une image 3D (IM₁) comprenant un tatouage (2) sur le corps d'un individu (1) par au moins un dispositif optique (3) d'un terminal électronique (4) ;
▪ la génération (GEN_{c}) d'une clef de cryptage (Kc) à partir d'un encodage de ladite au moins une image 3D (IM₁) du tatouage ;
▪ l'association (AS₁) de la clef de cryptage (Kc) avec une donnée prédéfinie (Id₄) stockée dans une mémoire dudit terminal électronique (4), ladite association (AS₁) définissant une clef d'authentification à deux facteurs (K_{A}) ;
▪ L'association (AS₂) par un serveur de gestion de droits d'accès (GEST) de la clef d'authentification à deux facteurs (K_{A}) à un espace mémoire (M₀) d'un réseau de données (NET₁).

2. Procédé selon la revendication 1, dans laquelle l'acquisition (ACQ₁) comprend une pluralité d'acquisitions d'images 3D du tatouage (2) afin de générer un modèle 3D de cryptage (MOD_3D) dont chaque point est **caractérisé par** des données géométriques et des données de couleur.

3. Procédé selon la revendication 1, dans laquelle la génération d'un modèle 3D de cryptage (MOD_3D) comprend un redimensionnement dudit modèle à une échelle prédéfinie et une association de coordonnées à chacun des points à partir d'un point de référence dudit modèle 3D de cryptage (MOD_3D) et d'un repère prédéfini.

4. Procédé selon l'une quelconque des revendications 2 ou 3, dans laquelle l'encodage comprend la génération d'un ensemble de points d'ancrage du modèle 3D de cryptage définissant des informations à encoder pour générer une clef de cryptage (Kc).

5. Procédé selon l'une quelconque des revendications 1 à 3, comprenant une pluralité d'acquisitions d'images 3D ({IMᵢ}_{iE[1 ;N]}) du tatouage (2) jusqu'à obtenir un nombre minimal de points d'ancrage pour l'encodage dudit tatouage (2).

6. Procédé selon l'une des revendications 1 à 4, comprenant une segmentation du modèle 3D en différentes parties définissant un ensemble de modèles 3D partiels, chaque modèle 3D partiel étant associé à un espace mémoire (Mᵢ) dédié.

7. Procédé selon l'une des revendications 1 à 5, comprenant :
▪ association d'une seconde donnée prédéfinie (Id_{K}) avec un sous espace mémoire (m₀) de l'espace mémoire (M₀) ;
▪ génération d'une donnée d'accès à un tiers audit sous espace mémoire (m₀) ;
▪ émission de la donnée d'accès audit tiers.

8. Procédé selon l'une quelconque des revendications 1 à 2, dans laquelle une image 3D acquise comprend une image 2D et une carte de profondeur.

9. Procédé d'accès à une mémoire (M₀) d'un réseau de données (NET₁) à partir de l'image d'un tatouage (2) d'un corps humain (1) comportant les étapes suivantes :
▪ acquisition (ACQ₁) d'une image 3D (IM₁) comprenant un tatouage (2) sur le corps d'un humain (1) par une optique (3) d'un terminal électronique (4) ;
▪ génération (GEN_{d}) d'une clef de décryptage (Kd) à partir d'un encodage du tatouage de ladite image 3D acquise ;
▪ association (AS₃) de la clef de décryptage (K_{d}) avec une donnée prédéfinie enregistrée (Id₄) dans une mémoire du terminal électronique (4) ; ladite association définissant une donnée d'authentification à deux facteurs (D_{A}) ;
▪ contrôle (CTR₁) de la donnée d'authentification (D_{A}) par le serveur de gestion de droit d'accès (GEST) à partir d'une clef d'authentification (K_{A}) connue dudit serveur de gestion de droits d'accès (GEST) ;
▪ génération (GEN_{A}) d'un droit d'accès à un espace mémoire (M₀) accessible depuis un réseau de données (NET₁), ladite mémoire (M₀) étant associée à ladite clef d'authentification (K_{A}).

10. Procédé selon la revendication 9, dans laquelle la clef d'authentification (K_{A}) associée à un espace mémoire (M₀) accessible depuis un réseau de données (NET₁) est générée par la méthode selon l'une des revendications 1 à 6.

11. Procédé selon la revendication 9, comprenant :
▪ génération d'un indicateur de mortalité (I_{MO}) dudit humain ayant ledit tatouage ;
▪ libération de la clef de cryptage (Kc) pour accéder à au moins un sous-espace mémoire (mo') prédéfini en fonction de la valeur dudit indicateur de mortalité (I_{MO}).

12. Procédé selon la revendication 9, dans laquelle la clef de décryptage (K_{d}) est associée avec une date, ladite date étant soit un horodatage propre à l'acquisition du tatouage (2), soit un horodatage de l'émission de ladite clef de décryptage (K_{d}), le contrôle de la donnée d'authentification (K_{A}) comprenant un contrôle de l'horodatage de l'acquisition et/ou de l'horodatage de l'émission.

13. Système comprenant :
▪ Un terminal électronique comprenant un dispositif optique et une interface de communication sans fil pour transmettre des données vers un réseau de données (NET) ;
▪ un calculateur (CALC) adapté pour exécuter les étapes du procédé selon l'une quelconque des revendications 1 à 12.

14. Produit programme d'ordinateur téléchargeable depuis un réseau de communication et/ou enregistré sur un support de données lisible par un ordinateur et/ou exécutable par un ordinateur, **caractérisé en ce qu'**il comprend des instructions de code de programme informatique de mise en œuvre du procédé selon l'une des revendications 1 à 12.

15. Support d'enregistrement de données, lisible par un ordinateur, sur lequel est enregistré un programme d'ordinateur comprenant des instructions de code de programme de mise en œuvre du procédé selon l'une des revendications 1 à 12.
